(19) **Europäisches Patentamt / European Patent Office / Office européen des brevets**

(11) **EP 4 462 725 A1**

(12) **EUROPEAN PATENT APPLICATION**

(43) Date of publication:
**13.11.2024 Bulletin 2024/46**

(21) Application number: **23172580.5**

(22) Date of filing: **10.05.2023**

(51) International Patent Classification (IPC):
**H04L 9/08** (2006.01)    **H04L 9/14** (2006.01)
**G06Q 20/06** (2012.01)

(52) Cooperative Patent Classification (CPC):
**H04L 9/0869; G06Q 20/02; G06Q 20/065;
G06Q 20/367; G06Q 20/3829; H04L 9/14;**
H04L 2209/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Gurulogic Microsystems Oy
20100 Turku (FI)**

(72) Inventor: **KÄRKKÄINEN, Tuomas
20400 Turku (FI)**

(74) Representative: **Papula Oy
P.O. Box 981
00101 Helsinki (FI)**

(54) **METHODS AND ARRANGEMENTS FOR MAKING A USER DEVICE UTILIZE A SECRET**

(57)     An arrangement comprises a communications system and, functionally coupled thereto, an account management system. The account management system generates (304) a first digital value, referred to below as the user-specific random salt ($URT_{SALT}$), and transmits it to a user device. It responds to a subsequent registration request (311) from said user device by generating (312) and transmitting to a trusted central arrangement a further registration request (312) containing at least the user's first public key ($URT_{PK}$) received in said registration request. A subsequent registration response (316) from said trusted central arrangement contains the user's second public key ($UAT_{PK}$). To said user device is transmitted a further registration response (319) containing at least said user's second public key ($UAT_{PK}$).

Fig. 3

EP 4 462 725 A1

**Description**

**FIELD OF THE INVENTION**

The invention concerns generally the technical field of security needed in using digital services in communications between digital devices and their users. In particular, the invention concerns the offering of secure digital services that a user can utilize in a very flexible manner, even without a user device if desired.

**BACKGROUND OF THE INVENTION**

Security in digital communications involves multiple aspects such as confidentiality (only authorized parties can access a piece of information), authentication (a communicating party must be sure who they are communicating with), integrity (a piece of information has not been unallowably modified), and non-repudiation (a party cannot successfully deny having sent a certain piece of information). All such aspects of security must ultimately build upon a secret piece of digital information, usually referred to concisely as the secret. To provide sufficient security against breaking attempts, the secret must be derived from randomness.

A major area of application of digital services is digitally managed commerce. Cash payments have already been largely replaced with card payments, relying upon user-specific digital information stored on smart cards, as well as mobile payments in which a mobile digital device provides both the storage means for digital information and the communications required to set up and execute transactions. However, there is a continuous need for methods and arrangements for digitally managed transactions that are safe, easy to apply, and scalable to many kinds of commercial environments.

Comparable to commerce, there are many applications in which service providers offer other kinds of digital services to users over long-distance network communications, placing similar requirements to security and confidentiality. Examples of such other digital services include but are not limited to: public services of officials and governmental institutions, health and medical services; membership-bound services of non-profit private organizations; and the like.

**SUMMARY**

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an objective to provide methods and arrangements for ensuring secure digital communications between parties for the purpose of digitally managed transactions.

According to a first aspect, there is provided an arrangement for setting up and maintaining user accounts. The arrangement comprises a communications system configured to set up and maintain communications with user devices and with at least one trusted central arrangement. Functionally coupled to said communications system is an account management system configured to generate with a random number generator and provide to said communications system, for further transmission towards a user device, a first digital value, referred to below as the user-specific random salt. A subsequent registration request from said user device contains a second digital value referred to below as the user's first public key. The arrangement responds by generating and providing to said communications system, for further transmission towards said trusted central arrangement, a further registration request containing at least said user's first public key. The arrangement responds to a subsequent registration response from said trusted central arrangement, said registration response containing a third digital value referred to below as the user's second public key, by generating and providing to said communications system, for further transmission towards said user device, a further registration response that contains at least said user's second public key.

According to an embodiment, said account management system is configured to make said further registration response contain also said user-specific random salt. This involves at least the advantage of enabling very versatile use of the provided information later, even without needing a particular user device for such use.

According to an embodiment, said account management system is configured to format said further registration response in the form of a graphically representable code. This involves at least the advantage of enabling particularly versatile use of the provided information.

According to an embodiment, said account management system is configured to maintain an account of digital assets associated with said user device. It may then respond to a transaction request, received from said trusted central arrangement subsequent to said registration response, by attempting decrypting at least a part of said transaction request with said user's first public key. Only if said attempted decrypting succeeds, a transaction requested in said transaction request may be executed on said account of digital assets. This involves at least the advantage of additional security against attempts made by unauthorized parties.

According to an embodiment, said account management system is configured to only execute said transaction if said transaction request was the first transaction request concerning which said attempted decrypting with said user's first public key succeeded. This involves at least the advantage of additional security against attempts made by unauthorized parties.

According to an embodiment, said account management system is configured to attempt decrypting at least a part of said transaction request with said user's second public key. Only if said attempted decrypting with said user's second public key succeeds, said transaction may be executed. This involves at least the advantage of additional security against attempts made by unauthorized parties.

According to a second aspect, there is provided a method for setting up and maintaining user accounts. The method comprises generating with a random number generator a first digital value, referred to below as the user-specific random salt, and transmitting said user-specific random salt towards a user device. The method comprises responding to a subsequent registration request from said user device, said registration request containing a second digital value referred to below as the user's first public key, by generating and transmitting to a trusted central arrangement a further registration request containing at least said user's first public key. The method comprises responding to a subsequent registration response from said trusted central arrangement, said registration response containing a third digital value referred to below as the user's second public key, by generating and transmitting to said user device a further registration response containing at least said user's second public key.

According to an embodiment, said generating of the further registration response comprises making said further registration response contain also said user-specific random salt. This involves at least the advantage of enabling very versatile use of the provided information later, even without needing a particular user device for such use.

According to an embodiment the method comprises formatting said further registration response in the form of a graphically representable code. This involves at least the advantage of enabling particularly versatile use of the provided information.

According to an embodiment, the method comprises maintaining an account of digital assets associated with said user device. The method may then comprise responding to a transaction request, received from said trusted central arrangement subsequent to said registration response, by attempting decrypting at least a part of said transaction request with said user's first public key. Only if said attempted decrypting succeeds, the method may comprise executing a transaction requested in said transaction request on said account of digital assets. This involves at least the advantage of additional security against attempts made by unauthorized parties.

According to an embodiment, the method comprises only executing said transaction if said transaction request was the first transaction request concerning which said attempted decrypting with said user's first public key succeeded. This involves at least the advantage of additional security against attempts made by unauthorized parties.

According to an embodiment, the method comprises attempting decrypting at least a part of said transaction request with said user's second public key, and only if said attempted decrypting with said user's second public key succeeds, executing said transaction. This involves at least the advantage of additional security against attempts made by unauthorized parties.

According to a third aspect, there is provided a computer program product comprising one or more sets of one or more machine-readable instructions that, when executed by one or more processors, cause the implementation of a method according to any of the characterisations given above.

## BRIEF DESCRIPTION OF THE DRAWINGS

In the drawings:

**Figure 1** illustrates steps of a method on a highly abstract level,
**Figure 2** illustrates steps of a method on a highly abstract level,
**Figure 3** illustrates steps of a method,
**Figure 4** illustrates an example of generating keys from stored and memorized information,
**Figure 5** illustrates steps of a method,
**Figure 6** illustrates steps of a method, and
**Figure 7** illustrates steps of a method.

## DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

The following description uses the designations "trusted central arrangement", "service provider", and "user device". Of these, a trusted central arrangement refers to a computer device or an arrangement of interlinked computer devices that together constitute a trusted computing environment. This means that the constitution and operation of the trusted central arrangement are known and verifiable by a party who the involved parties consider trustworthy. Examples of a trusted central arrangement involve but are not limited to a computer system of a bank, a governmental authority, or a specialized commercial company offering this kind of services to other companies. Other designations that could be used in place of or in addition to "trusted central arrangement" are at least "trust provider", "trusted environment", "trusted server", and "wallet provider".

The concept of a service provider refers to a commercial operator, non-commercial organization, governmental institution, or other party that has an interest of setting up and maintaining long-lasting customer relationships with large numbers of customers. The term "customer" does not necessarily mean that the customer relationships should aim at generating commercial profit or other advantage to the service provider. As an example of the last-mentioned, a resident of a city may be a "customer" of the municipal administration.

The customers of a service provider may be individual users, user groups, associations, companies, public institutions, or any mixture of these. In many cases, a service provider may run a computer device (or an arrangement of interlinked computer devices) of their own that together constitute(s) a trusted computing environment. However, for the purposes of the following description, it is assumed that the roles of a service provider and a trusted central arrangement can be separated. It is also possible, however, that the same party is responsible for both these roles. Even in such case, it may be advantageous from management point of view to use different computer devices, all within the trusted computing environment of the party in question, to implement said two roles.

The user device is not necessarily a single device and/or not necessarily used by a single human user, although a most illustrative example of a user device meant here is a smartphone, tablet, or laptop computer of a user. As an example of wider applicability of the term, the user device may refer to a personal digital assistant authorized by the actual user to perform operations on behalf and for the benefit of the user. Contrary to the obsolete use of the term, in the sense used here a personal digital assistant is not (necessarily) a so-called PDA device (i.e. a specialized, palm-sized tablet computer) but may refer to many kinds of implementations ranging from pure software to various embedded solutions including software and hardware.

In general, the user device is a device or an arrangement of interlinked devices and/or software that are to be used, among others, for secure, cryptographically protected digital communications with one or more trusted central arrangements. The constitution and operation of the user device meant here are not similarly known and verifiable as those of the trusted central arrangement, although it may be assumed that for said digital communications (and for services that rely upon said digital communications) the user device uses installed and/or downloadable application programs of known kind.

A special case of a user device may be designated as a merchant or a merchant's device. This special case is described in more detail in the following. To emphasize also possible non-commercial uses of the invention, the "merchant" could also be a public servant employed by a governmental or municipal administrative organization or the like.

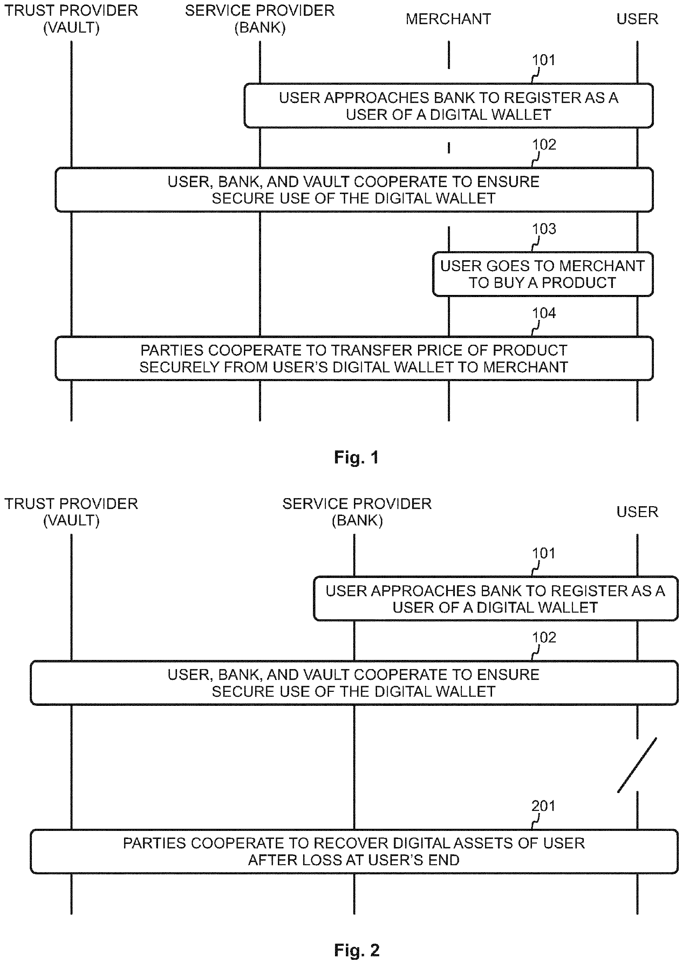

Fig. 1 illustrates steps of a method on a highly abstract level. The parties involved are a trust provider, a service provider, a merchant, and a user. For the purpose of illustration, the service provider may be a bank, the merchant may be a shopkeeper and the user may be an individual person who comes to the shop to buy a product. In the alternative example mentioned above, the service provider could be the administrative organization and the user could be a citizen paying a visit to the public servant. In such cases, certain embodiments described herein may be useful in enabling the use of public digital services for users who are not capable or willing to carry and use a smartphone or the like.

Steps 101 and 102 in fig. 1 are preparatory steps for setting up conditions under which the user may make payments using a digital wallet, take part in the utilization of public services using digital channels, or the like.

In step 101 the user approaches the service provider to register as a user of a digital wallet and/or other kind(s) of digital service(s). In step 102 the user, the service provider, and the trust provider cooperate to ensure secure use of the digital wallet and/or other kind(s) of digital service(s).

For the purposes of this description, a digital wallet is a cloud-based service with which a user may keep some money (or other digital assets) in store, and for example effect payments with the stored money or otherwise utilize said digital assets, without having to carry along any direct physical representation of said money or asset. Figuratively, the digital wallet corresponds to a physical wallet and/or to some physical object conventionally stored in a wallet, with the difference that for using the digital wallet the user must somehow establish a communications connection with the service provider.

Making payments with money (or some digital representation thereof) is a straightforward and easily understandable application for using a digital wallet, for which reason it is used as an example in the following. However, it must be noted that the same concept is similarly applicable for using other kinds of digital services and not only monetary payments. As a further illustrative example, a digital asset stored in a digital wallet could be an indication of a property or right acquired by or granted to the user, like a digital driver's licence, i.e. a digitally protected certificate of the right of the user to drive certain kinds of vehicles. For this reason, the concept of "executing a transaction" should be understood in a wide sense as covering all secure, user-initiated processing of digital data for the secure maintaining of which a party called here a service provider is responsible.

At step 103, the user goes to the merchant to buy a product, visits the public servant to utilize public digital services, or becomes closely involved with some other kind of contact person or entity to perform a respective operation. The merchant example is referred to most frequently in the following, but the general applicability of the method should be kept in mind.

Step 104 represents all those actions of the parties that make an agreed amount of money (or other digital assets) be transferred from the digital wallet of the user to the merchant. In the merchant example, at step 104 a payment is effected in which the user pays the price of the product to the merchant, however without having to handle cash or any other carried-along representation of money. In examples that do not involve purchasing, step 104 represents any and all other steps in which the parties exchange digital information taking advantage of the digital security brought about by the aspects explained in this text.Important aspects of the present invention are related to how it can be ensured, in steps 101 and 102, that steps 103 and 104 go as simply, yet securely, as possible and that:

- the merchant and the user do not need to have any prior information of each other,
- if desired, the transaction may remain as anonymous as if it involved buying a product with cash, while in some other applications a core part of the transaction may be secure identification of the user,
- only minimal requirements are placed to the hardware and software that the user and the merchant must have access to, and
- all parties can remain assured that the transaction did not compromise security, so that - for example - neither the user nor the merchant acquired any lasting confidential information that they could subsequently use in any manner prejudicial to the interests of each other.

Fig. 2 illustrates the steps of another method on a highly abstract level. In fig. 2, the parties involved are a trust provider, a service provider, and a user.

Steps 101 and 102 in fig. 2 are similar to the correspondingly numbered steps in fig. 1. As a difference to fig. 1, in fig. 2 there is no merchant or corresponding party involved. After the execution of step 102, the user suffers a loss in which, for example, the mobile communications device that the user used to store all previously created digital secrets is lost or seriously damaged. Step 201 represents all such actions that the parties shown in fig. 2 take in order to recover the possibility of the user to utilize the digital wallet that was set up in steps 101 and 102. Involving the service provider in step 201 is not necessary, but not excluded either.

The following description shows how certain actions taken in steps 101 and 102 lay a basis for successful subsequent operation in accordance with both fig. 1 and fig. 2.

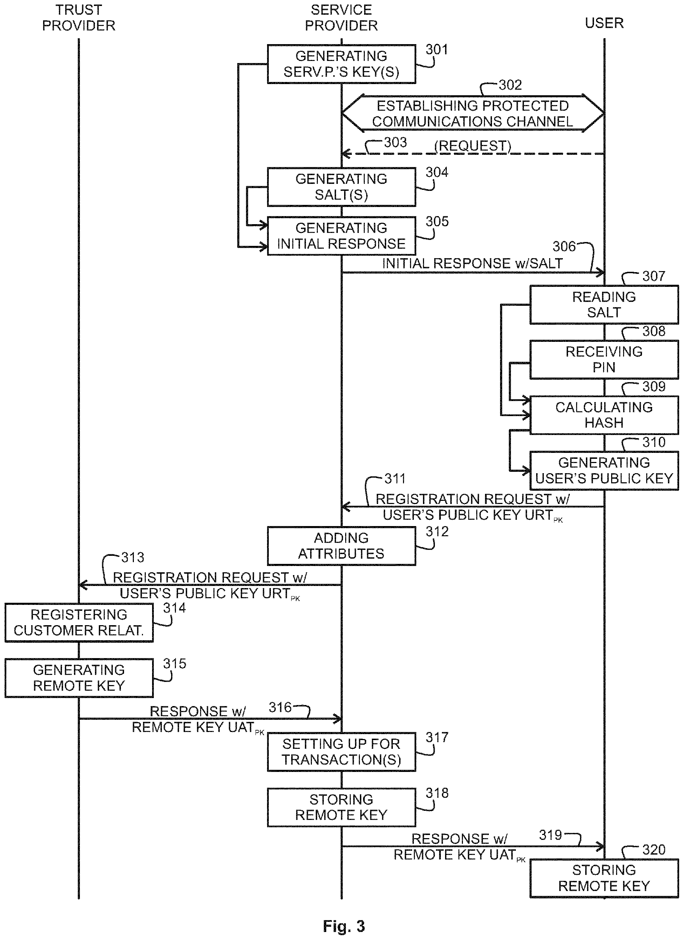

Fig. 3 illustrates certain actions taken by - and certain exchange of information between - a user, a service provider, and a trust provider. In practice, these designations refer to the devices, arrangements, etc. operated by said parties, unless otherwise explicitly stated. Said devices, arrangements, and the like most advantageously consist of programmable electric devices and their connections for communications. Each such device, arrangement, and the like may be functionally divided into more detailed parts: for example, the arrangement for setting up and maintaining user accounts in the domain of the service provider may be considered to comprise a communications system configured to set up and maintain communications with user devices and with at least one trusted central arrangement, and - functionally coupled to said communications system - an account management system. For conciseness of reference, the short designations user (or user device), service provider, and trust provider are used in the following.

Step 301 in fig. 3 is a preparatory step in which the service provider generates some keys of its own, to be used for the purposes of secure digital communications according to one or more PKI infrastructures, for example.

At step 302, a protected communications channel is established between the service provider and the user. The protected communications channel may be, for example, a digital communications channel in which the Transport Layer Security or TLS standard is used. As another example, algorithms according to Quantum-Safe Cryptography (QSC) can be used. Said concept is under development at the time of writing this text and can be alternatively referred to as Post-Quantum Cryptography (PQC) or Quantum-Resistant Cryptography (QRC). As another example, step 302 may involve bringing the user device close enough to a wireless communication means or connecting with a cable, such as a shielded electric cable or an optical fibre cable for example, for exchanging information over a short distance under circumstances that are considered secure enough, like under the supervision of an authorised official for example. As yet another example, step 302 may involve using optical fibre as quantum channel to establish an electrically controlled polarization system for encoding and decoding a secret by twin photon source. This fibre optic communication principle is used in quantum key transmission (QKD) and therefore it can be also used to transmit the secret seed or salt from the trusted computing environment, which is suitable as secure digital communications channel, because it is unbreakable by conventional methods.

Step 303 is an optional step, in which the service provider may receive from the user a request for initiating the subsequent sequence of steps. The request of step 303 is optional because the service provider may initiate said sequence of steps of its own motion, as a response to finding that a user device has come close enough or that the favourable conditions for performing said sequence of steps have otherwise been generated. As an illustrative example, if the protected communications channel established at step 302 involved the user accessing a web page of the service provider, the request of step 303 may be sent as a response to clicking a link on said web page.

At step 304 the service provider uses a random number generator to generate what may be called a first digital value or a user-specific random salt. In the following, the acronym $URT_{SALT}$ will be used. For optimal level of security, it is advantageous for the service provider to use a verified random number generator capable of generating random numbers of maximum entropy. At the time of writing this text, it is considered advantageous from the security viewpoint that the user-specific random salt $URT_{SALT}$ generated at step 304 is at least 256 bits long. Due to subsequent technical developments, it may become appropriate to use user-specific random salt values more complicated than that.

At step 305, the user-specific random salt $URT_{SALT}$ is provided to a communications system of the service provider for further transmission to the user through the protected communications channel that was established at step 302. The generation of a transmission at step 305 may also include using other information elements, such as transmitting one or more public keys of the service provider to the user. It may also involve digitally signing at least a part of the intended transmission with a secret signing key of the service provider, so that the user who later receives the transmission may use a corresponding public key to verify that it originated from the service provider. The resulting transmission, which conveys at least the user-specific random salt $URT_{SALT}$ to the user, is shown as step 306 in fig. 3.

At step 307 the user device extracts the user-specific random salt $URT_{SALT}$ from the transmission it received. In order to base the security of subsequent digital communications and operations on secret information from two independent sources, the user gives a PIN (Personal Identification Number) code at step 308. In place of or in addition to a PIN in conventional sense (i.e. a relatively short string of numbers or other characters) the PIN code given at step 308 may be a biometric identifier such as a fingerprint, an iris reading, a face liveliness metric, or the like, and/or a mathematical result derived thereof, and/or any combination of those above. For conciseness of notation, the PIN may be given the designation $URT_{PIN}$ and its generation may involve an SHA256 hash or other cryptographic operation, so that - for example - if the actual PIN is a conventional short character string, $URT_{PIN}$ = SHA256 (PIN) .

From these two information elements (the $URT_{SALT}$ and the $URT_{PIN}$), a hash or other digital cryptoproduct is calculated at step 309. The algorithm used to calculate the hash at step 309 is most preferably a verified one, such as the Argon2 algorithm for example. The calculated result may be used as such as a secret key $URT_{SK}$ of the user in the continuation. According to cryptographic shorthand notation,

$$URT_{SK} = Argon2(URT_{PIN},\ URT_{SALT})$$

where the "Argon2" part may be replaced with the representation of any corresponding other cryptographic operation used for the same purpose.

It is also possible that the secret key $URT_{SK}$ of the user is obtained from the calculated result through some further cryptographic algorithm.

At step 310, the user device uses the calculated hash or some further cryptoproduct derived therefrom to generate what is called here a second digital value or the user's first public key $URT_{PK}$. One example of a mathematical method to be used at step 310 is the X25519 algorithm, so that

$$URT_{PK} = X25519(URT_{SK})\ =\ X25519(Argon2(URT_{PIN},\ URT_{SALT})).$$

In place of the X25519 algorithm, some other suitable algorithm like the Ed25519 algorithm could be used. For the further description of the method below, it is important to understand that by knowing the user-specific random salt $URT_{SALT}$, the PIN code $URT_{PIN}$, the algorithms used in steps 309 and 310, and the public key encryption or public key signing algorithms used, it is possible to reproduce the secret key $URT_{SK}$ of the user, as well as the user's first public key $URT_{PK}$,

also later.

At step 311, the user uses a suitable channel, for example the previously established protected communications channel, to transmit to the service provider a registration request that includes at least the user's first public key $URT_{PK}$. For added security, it is advantageous for the user to encrypt at least a part of the registration request with the secret key $URT_{SK}$, so that by successfully decrypting with the user's first public key $URT_{PK}$, the service provider may verify that the registration request came from the user and was not falsified or modified on the way by any malicious third party.

In response to receiving the registration request 311, the service provider generates what is called here a further registration request. The intended recipient of the further registration request is the trust provider, and the purpose of the further registration request is to make the trust provider create a digital wallet for the user. Alternatively, if a digital wallet was already created for this user at some earlier stage, the purpose of the further registration request is to make the trust provider modify, augment, or refresh the previously created digital wallet using the newest information from the service provider.

As shown at step 312 in fig. 3, generating the further registration request at the service provider may involve adding attributes pertinent to the current exchange of information with the user. In particular, the further registration request should contain at least the user's first public key $URT_{PK}$. The further registration request may also contain a user identifier UID, which may be an identifier that the service provider received previously from the user or an identifier that the service provider has generated for identifying this particular user. The communications system of the service provider transmits the further registration request to the trust provider at step 312.

At step 314, the trust provider registers the customer relationship of the user and the service provider. In other words, the trust provider stores one or more sets of information that associate this user with this service provider and those attributes that were provided in the further registration request of step 312. In order not to maintain confidential information in plaintext, it is advantageous if the trust provider encrypts the stored information, for example with the user's first public key $URT_{PK}$ it received in the further registration request and discards any plaintext copies of the information. Most advantageously, the trust provider who maintains the digital wallets of users maintains these in anonymised form and uses only user identifiers (UID's) or some mathematical derivatives thereof, like hashed UID's (designated H(UID)'s) to refer to said encrypted and stored digital wallets. A consequence thereof is that even the trust provider will not necessarily have access to its stored user-specific information without the secret key $URT_{SK}$ of the user that at this time exists only in the possession of the user (although, as noted earlier, it can be reproduced by knowing the user-specific random salt $URT_{SALT}$, the PIN code $URT_{PIN}$, and the appropriate algorithms) . The purpose of such security measures is to prevent undesired access to the stored user-specific information by parties like system administrators who otherwise must have extensive access rights due to their tasks and responsibilities. Governmental regulations may stipulate that an official authority must be made a member in at least some kinds of transactions, for lawful and necessary purposes such as preventing money laundering or other kind of criminal activity.

At step 315, the trust provider generates another pair of keys including a secret key $UAT_{SK}$ and a public key $UAT_{PK}$. Of these, the user's second public key $UAT_{PK}$ is called here a third digital value. The secret key $UAT_{SK}$ remains in the exclusive possession of the trust provider, while it transmits the user's second public key $UAT_{PK}$ to the service provider in a transmission that is called a registration response at step 316 in fig. 3. The user's second public key $UAT_{PK}$ is called the "remote key" for short in fig. 3, because it was generated at a distance (at least in organisational sense, if not necessarily physically) from the user. It could also be called the (public) User Access Token, as in the acronym UAT.

At steps 317 and 318, the service provider finalises its part of setting up the customer relationship with the user. As underlined in step 317, the service provider is now ready for transactions, examples of which are described in more detail later in this text. In particular, as underlined in step 318, it has stored also the user's second public key $UAT_{PK}$ it received from the trust provider in the registration response of step 316. It also generates (and provides to its communications system) a further registration response 319, which contains at least the user's second public key $UAT_{PK}$ for transmission to the user. Storing said user's second public key $UAT_{PK}$ at the user device is shown as step 320 in fig. 3.

As a result of the actions and exchange of information described above, the service provider knows, among others, that

- if it gets hold of a piece of encrypted information that can be appropriately decrypted with the user's first public key $URT_{PK}$, that piece of information must originate from the user (or at least have been created with the consent of the user) because only the user (or a party who the user authorised with their PIN code) can have encrypted it with the corresponding secret key $URT_{SK}$, and
- if it gets hold of a piece of encrypted information that can be appropriately decrypted with the user's second public key $UAT_{PK}$, that piece of information must originate from the trust provider because only the trust provider can have encrypted it with the corresponding secret key $UAT_{SK}$.

Concerning the further registration response transmitted to the user at step 319, the (account management system of the) service provider may have been configured to make it contain also the user-specific random salt $URT_{SALT}$

mentioned earlier in association with at least steps 304 to 309. As such, the user device knows the user-specific random salt $URT_{SALT}$ already, because it received it in the initial response of step 306. However, there are cases in which a simultaneous occurrence of the user-specific random salt $URT_{SALT}$ and the user's second public key $UAT_{PK}$ is particularly useful.

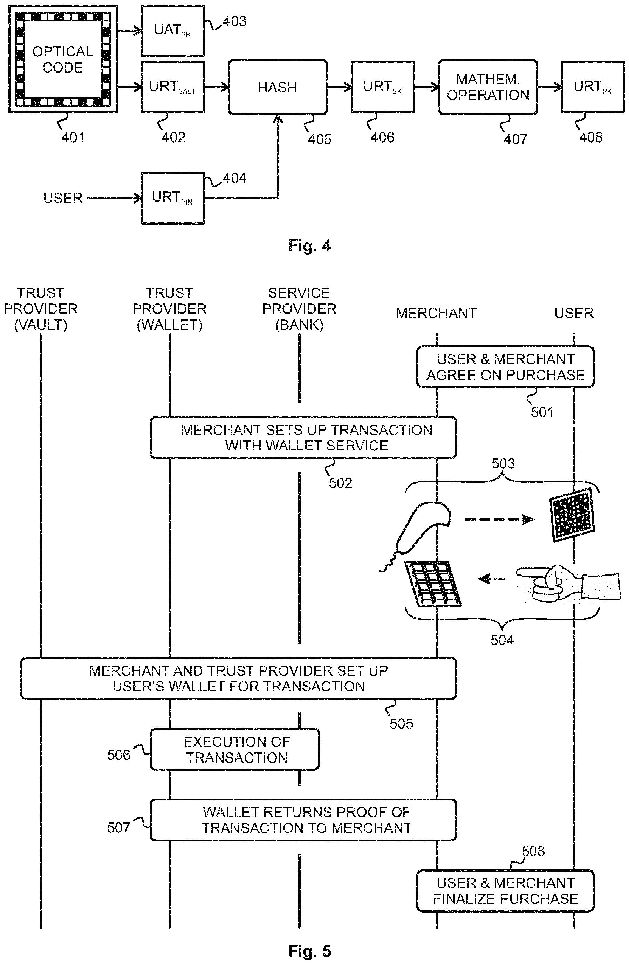

As an example, in fig. 4 it is assumed that the further registration response of step 319 or other simultaneous occurrence of the user-specific random salt $URT_{SALT}$ and the user's second public key $UAT_{PK}$ is formatted in the form of a graphically representable code 401. Here the expression "formatted in the form" may mean an actual graphically represented code 401 such as a QR code, or some instance of digital information from which a graphically represented code can be straightforwardly printed. From the technology of QR codes and the like, it is commonly known how for example a raw string of bits is straightforwardly converted into a tangible, printed form of graphically represented code. One possibility is that the further registration response of step 319 consists of actually printing out a QR code and handing it to the user. Another possibility is that the digital information contained in the further registration response readily enables the user to print it out in the form of a QR code.

The use of a QR code or other graphically representable code is an example of an embodiment of the kind mentioned earlier, in which a user may get access to (public) digital services without having to be capable or willing to use a smartphone or the like. Such a user may carry one or more pre-printed QR codes along and use them in the way described here.

As shown in fig. 401, by using a suitable reader device, anyone can readily read out the user-specific random salt $URT_{SALT}$ 402 and the user's second public key $UAT_{PK}$ 403 from the graphically representable code 401. If the PIN code $URT_{PIN}$ 404 is given by the user, one may use the same hash or other cryptographic operation 405 that the user originally used to obtain the secret key $URT_{SK}$. Further, one may use the same mathematical operation that the user originally used to obtain the user's first public key $URT_{PK}$.

A case in which these facts are utilised is shown schematically in fig. 5, which corresponds to steps 103 and 104 of the previously described fig. 1 and provides some more details. The actions in fig. 5 aim at allowing the user to purchase a product (or make some comparable transaction) without needing any user device at all. Again, the merchant-related example is used but the more general applicability of the method should be kept in mind.

In step 501, the user and a merchant preliminarily agree on a purchase; for example, the merchant agrees to sell to the user a product at a certain price. In step 502, the merchant uses a cash register or a corresponding device capable of digital communications to initiate a transaction by connecting to a trust provider. In fig. 5, a party that would correspond to the trust provider of figs. 1, 2, and 3 is shown to run two separate functionalities called the wallet and the vault. Applying this principle, the merchant communicates with the wallet functionality at step 502. Essentially, the merchant tells the wallet that someone (the identity of whom is not yet revealed to the wallet) is willing to pay the price agreed upon in step 501 to the merchant.

At step 503, the merchant uses an optical reader to read a QR code presented by the user; for example, the user may have produced a printed QR code on a piece of paper. At step 504, the merchant passes a small keypad to the user, who punches in a PIN code. If the concept of a PIN code involved some other user-specific aspects than a short character string that the user remembers by heart, step 504 may involve using other suitable for means for enabling the user to give the corresponding information to the merchant. Now the cash register of the merchant has acquired everything it needs: comparing to fig. 4, it read the user-specific random salt $URT_{SALT}$ 402 from the QR code 401 and received the PIN code $URT_{PIN}$ directly from the user. The cryptographic algorithms needed for steps 405 and 407 have been previously programmed to the cash register of the merchant.

Step 505 in fig. 5 represents communications between and operations by the cash register of the merchant as well as the wallet and vault functionalities of the trust provider that set up the digital wallet of the user for a transaction. The money or other digital assets of value of the user are held at the service provider (e.g. bank, governmental authority or the like), so at step 506 the wallet and the service provider cooperate to authorize and execute the actual payment or to otherwise grant access to the stored digital assets. At step 507 the wallet returns to the cash register of the merchant a receipt as a proof of the executed transaction. As a result, the merchant now knows that the agreed price has been paid, so the merchant can hand over the product to the user at step 508.

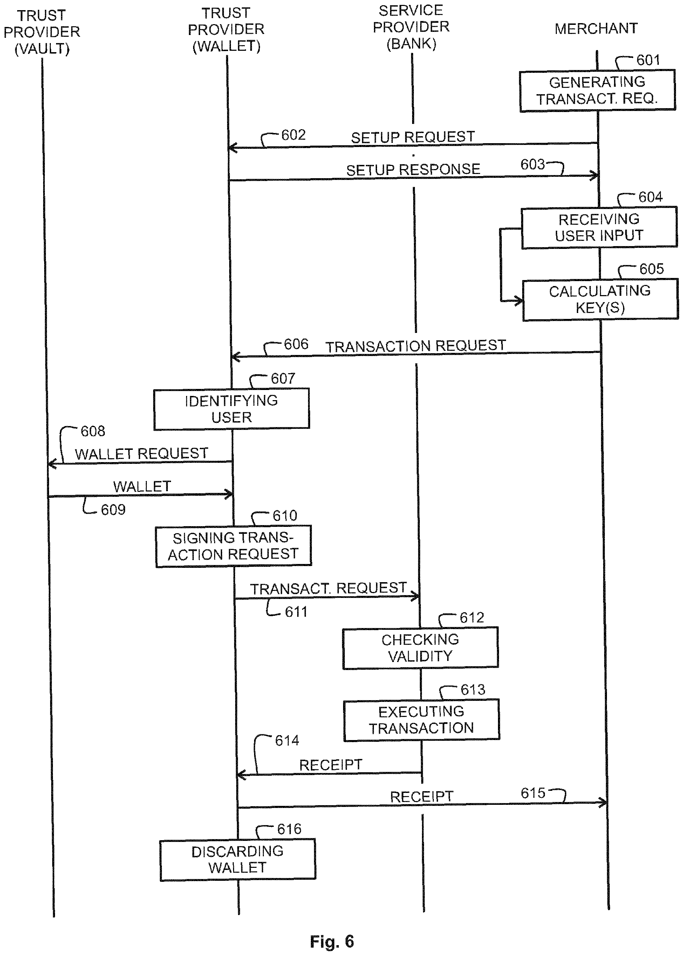

Fig. 6 is a more detailed representation of an example of communications between, and actions by, four devices or arrangements designated as the merchant, the service provider, the wallet, and the vault in the course of executing the method of fig. 5. Similar to fig. 3 above, the shortened notation of the communicating parties is used while it is obvious that each of these may involve a device or an arrangement as well as multiple connections for communications. Also similar to fig. 3, the concepts of a merchant as the party interacting with the user; a bank as a service provider; and buying a product as a transaction should not be considered limiting but only as an illustrative example of more general applicability of the described process.

At step 601, the merchant starts generating a transaction request. In the beginning, the only required information is the identity of the merchant as well as the monetary value or other measure of digital assets involved in the intended transaction.

The setup request at step 602 merely makes the wallet aware that this kind of a transaction is intended, and the setup response at step 603 acknowledges the initial readiness of the wallet. As an example, at step 602 a browser in the merchant's device may make a request to a particular URL of the trust provider, and at step 602 the trust provider may return a corresponding web page with fields for values to be filled in.

At step 604 the merchant receives the necessary input(s) from the user; see, for example, steps 503 and 504 in fig. 5. At step 605 the merchant uses these inputs to calculate the one or more keys it needs for the subsequent operations. In particular, at this stage the merchant gets hold of the secret key $URT_{SK}$. By knowing the mathematical operation designated with reference designator 407 in fig. 4, the merchant can also obtain the user's public key $URT_{PK}$.

At step 606 the merchant transmits to the wallet the actual transaction request. Essentially, at step 606, the merchant requests the agreed price to be transferred from the possession of the user to the possession of the merchant. At least a part of the transmission at step 606 is encrypted with the secret key $URT_{SK}$. Advantageously, the transmission at step 606 also contains the user's public key $URT_{PK}$.

When the wallet receives the transaction request 606, it notes that said encrypted part decrypts appropriately with the user's first public key $URT_{PK}$. The wallet thus concludes that the transaction request of step 606 has been transmitted at least with the consent of the user, if not directly by the user. This step may thus be designated as identifying the user 607. Now the wallet is capable of associating the request it received at step 606 with a particular (hashed) user identifier UID and thereby with a particular archive of user-specific information that has been previously stored in encrypted form.At step 608 the wallet makes a request to the vault to get the actual wallet information of the identified user.

When the wallet information has been retrieved from the vault at step 609, the wallet functionality of the trust provider formulates a further transaction request, digitally signs it at step 610 using the previously generated secret key $UAT_{SK}$ and transmits, at step 611, to the service provider who maintains an account of digital asset associated with the user device for which the UAT- and URT-keys have been generated.

Before executing the requested transaction, the service provider should make sure that everything is as it should, i.e. that the user is aware of the transaction and has acknowledged it. Ensuring this may involve for example a check, whether an encrypted part of the request successfully decrypts with the user's first public key $URT_{PK}$. In other words, an account management system of the service provider who maintains an account of digital assets associated with the user device in question may respond to a transaction request 610 received from the trust provider (subsequent to a previous registration response; see step 316 in fig. 3) by attempting decrypting at least a part of the transaction request 611 with the user's first public key $URT_{PK}$. Only if said attempted decrypting at step 612 succeeds, the account management system may execute, on said account of digital assets, a transaction 613 that was requested in said transaction request 611.

As can be seen from the description above, at this stage of the procedure the secret key $URT_{SK}$ of the user has been revealed to also another party, i.e. the merchant. To maintain security, it may be advisable to make the secret key $URT_{SK}$ disposable, i.e. only valid or acceptable for one-time use. In practice, this may be ensured so that the account management system of the service provider is configured to only execute the transaction of step 613 if the transaction request of step 611 was the first transaction request concerning which said attempted decrypting with said user's first public key $URT_{PK}$ succeeded in step 612. Any later transaction requests successfully decrypted with the same public key $URT_{PK}$ will be rejected. Similarly, the trust provider may only accept one transaction request per each previously generated public key $URT_{PK}$ at step 607 and reject any later attempts. From the viewpoint of the user, assuming the practice of using QR codes, this means that once a QR code has been used it can be disposed of and another QR code must be used for the next purchase.

Also, as an additional security feature, the account management system of the service provider may be configured to attempt decrypting at least a part of said transaction request 611 with the user's second public key $UAT_{PK}$, at step 612. Only if said attempted decrypting with said user's second public key $UAT_{PK}$ succeeds at step 611, the service provider may execute the transaction at step 613. In other words, only such transactions will be executed for which it can be ensured that the request came from the trust provider (because the trust provides is the only one to hold the secret key $UAT_{SK}$).

If the transaction was successful at step 613, the service provider acknowledges it by sending a receipt to the wallet at step 614. The wallet forwards the receipt to the merchant at step 615. To ensure that no confidential information is unnecessarily stored in plaintext, the wallet may discard all such information at step 616; next time when needed, the appropriate information will be again fetched from the vault like in steps 608 and 609 above.

As already noted earlier, monetary payments between two parties (the user and the merchant) is only one example of how the present disclosure can be applied to enable secure use of digital services. The example explained above may be generalized by pointing out how the service provider may be any party responsible for maintaining and processing user-specific digital information in ways that need to be properly authorized. Such generalising may be illustrated for example as follows.

Instead of a bank, we may assume that the service provider is a privately operated medical station that offers occupational health services to the employees of companies with which it has signed a service agreement. The user may be one such employee, and the intended transaction involves scheduling an appointment with a doctor. Conventionally, when the scheduling service had not yet been digitalized, the user would have had to visit the reception to show a membership card issued by the employer, proving that he or she is employed by a company with a service agreement, before the receptionist would agree to schedule the appointment. Applying the present disclosure, the indication about the current employment of the user would be stored as a "digital membership card", i.e. a digital certificate signed by the employer company, in the digital wallet of the user.

For making the appointment, the user could use any device to which he or she could give, in some form or another, the "transaction request" (i.e. the request for scheduling an appointment) and the same input information that was given in the form of a QR code and a PIN code in the example above. Similar to steps 606 to 611, the transaction request would be routed through the trust provider, which checked that the digital certificate was valid before forwarding the - thus checked and authorized - transaction request to the scheduling system of the medical station. After making its own checks as explained above with reference to step 612 and "executing the transaction", i.e. scheduling the requested appointment, as in step 613, the scheduling system of the medical station would transmit a confirmation "receipt" to the trust provider, which then forwarded it to the device that the user used.

In the previous parts of the description above, it was explained how (at step 313 of fig. 3) the trust provider becomes aware of the user's first public key $URT_{PK}$ and how it may be that not even the trust provider has access to its stored user-specific information without the secret key $URT_{SK}$ of the user. On the other hand, as shown in fig. 4, it is possible to derive - from the graphically representable code 401 - the public key $UAT_{PK}$ as well as the secret key $URT_{SK}$ of the user. The PIN (or, more specifically, the $URT_{PIN}$) is needed for deriving the latter. These facts may be utilised, if needed, in direct communications between the user and the trust provider, in particular in some specific situations.

We may assume, for example, that the user has lost or broken a user device that was previously used as the user device of the described method. However, the user may still have access to tangible instances of the graphically representable code; in a simple case, the user may have a hard copy of a pre-printed QR code and/or the respective digital information stored in some other form. The user may visit the premises of the trust provider, or acquire a new device and set up a suitably protected communications connection by some other means, and present the pre-printed QR code to a reader. Additionally, the user may give the PIN, from which the $URT_{PIN}$ may be derived. After the necessary pieces of digital information have been communicated to the trust provider, the latter has available all required information that is needed to access its stored user-specific information, allowing desired parts of such information to be restored and made available to the user who thus didn't need their lost or broken user device after all.

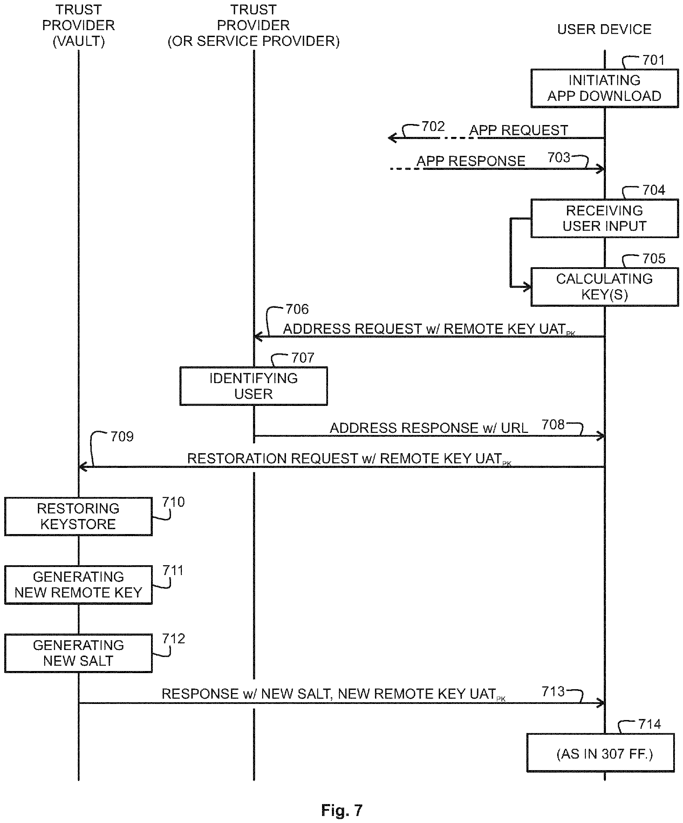

Fig. 7 illustrates an example of restoring a user account in a situation like the one referred to above. Here, it is assumed that the party referred to as the trust provider may comprise for example an arrangement such as the one described in a co-pending patent application number EP22157019.5, which is not available to the public at the time of writing this text. In short, said arrangement may comprise the features of a functionality referred to above as the trust provider or trusted central arrangement. With reference to fig. 3 above, the trust provider comprises the means for, and is configured to perform, at least the steps of

- receiving registration requests of the kind described in step 312,
- registering customer relations as in step 314,
- generating (remote) keys as in step 315, and
- generating and transmitting responses of the kind described in step 316.

Additionally, it is advantageous if the trust provider comprises means for securely generating random values of high entropy, similar to the means for generating the first digital value or user-specific random salt $URT_{SALT}$ in step 304 of fig. 3 above.

In fig. 7, two different functionalities of the trust provider are illustrated by the two long vertical lines on the left. The functionality referred to as the vault is similar to the correspondingly designated functionality above in figs. 5 and 6. The other functionality could be characterised as a registration service. This division into functionalities is only an illustrative example and should not be construed as a restriction. In some cases, a registration service of this kind could be run by a different party than the trust provider, like a service provider the services of which the user would like to continue utilizing in a way that requires also using the services of the trust provider.

In fig. 7, it is assumed that a user who has previously utilised a user device to participate in a method like that of fig. 3 has subsequently lost access to said user device. However, the user has still access to a previously obtained graphically represented (or representable) code, such as a QR code, or at least to the corresponding digital information. From said graphically represented code it is possible to derive at least the user's so-called second public key $UAT_{PK}$. Additionally, with the user-specific PIN it is possible to derive the key pair $URT_{SK}$, $URT_{PK}$. It is also assumed that the user has acquired a new user device such as a smartphone, which may be equipped with a digital camera.

At step 701 the user initiates the downloading of a suitable application program, concisely referred to as an app, to their new user device. Steps 702 and 703 represent the requesting and downloading of the app to the user device. The party with which these communications are exercised is not important; it may be for example some commonly used app store.

At step 704 the new user device receives user input. Step 704 may comprise, for example, the user utilizing a digital camera of the user device to read a QR code or utilizing some other capability of the user device to make it aware of the corresponding digital information. Additionally, at step 704 the user gives their user-specific PIN to the user device by keying in a character string, by allowing the device to read an iris or fingerprint, and/or through some other means. At step 705 the user device uses the app it received at step 703 to calculate at least the secret key $URT_{SK}$ and the corresponding public key $URT_{PK}$ as was described above with reference to fig. 4.

At step 706 the user transmits to the registration service a request for the address of that functionality at which the desired user account restoration should be accomplished. The request transmitted at step 706 comprises the second public key $UAT_{PK}$, which the registration service accepts as sufficient proof of the user being authorized to contact the vault. This is illustrated in fig. 7 as identifying the user at step 707. As a response, the registration service sends to the user an address (like an URL) at step 708. Steps 706, 707, and 708 are optional, because the user may already know an appropriate address of the vault from some other source.

At step 709 the user device utilizes the address it received at 708 to transmit to the vault a restoration request. The restoration request of step 708 comprises at least the second public key $UAT_{PK}$ of the user. At least a part of the restoration request may be encrypted with the secret key $URT_{SK}$ of the user. As explained earlier with respect to e.g. fig. 3, the vault has the means necessary to ensure that a received piece of information must originate from the user (or at least have been created with the consent of the user) because only the user (or a party who the user authorised with their PIN code) can have encrypted it with the corresponding secret key $URT_{SK}$. Additionally, the vault has the means necessary to associate, after receiving a request of the kind shown at step 709, the request with a (hashed) user identifier UID and, consequently, recognize and decrypt the user-specific information it has previously stored in encrypted form.

At step 710 the vault restores (i.e. decrypts) the information that corresponds to what was referred to as the "actual wallet information of the identified user" above with respect to step 610 in fig. 6. In fig. 7 the corresponding information is referred to as the keystore of the user. Regardless of the literal designations used, step 710 may be described as restoring, at the vault, confidential user-specific information that was previously stored in the vault in encrypted form.

Considering that a particular graphically representable code was "exhausted" through use in a restoration request, it is highly recommendable to make sure that the same secret key $URT_{SK}$ and the same graphically representable code cannot be used anymore for anything else. This means that at least some core operations of the key- and code-generating actions described earlier should now be repeated. At step 711 of the embodiment of fig. 7, the vault generates another pair of keys including a new secret key $UAT_{SK}$ and a new ("second") public key $UAT_{PK}$. Similar to step 315 in fig. 3, the new secret key $UAT_{SK}$ remains in the exclusive possession of the vault. The user's new second public key $UAT_{PK}$ is transmitted to the user device at step 713, as is a new user-specific random salt that the vault generated at step 712 in the embodiment of fig. 7.

Similar to step 319 in fig. 3, the new user-specific random salt $URT_{SALT}$ and the user's new second public key $UAT_{PK}$ may be formatted in the form of a graphically representable code. In other words, this way the user may get hold of e.g. a new QR code that will be available for future use in place of the one that got "exhausted" in the restoration request. Step 714 represents all those actions that the user device may perform after receiving such a graphically representable code, just like from step 307 onwards in fig. 3 earlier. In particular, it is advisable to continue from the restoration process into steps like those shown as steps 311-320 in fig. 3, because this way the user's confidential data stored in the vault becomes again encrypted in a way that necessitates a permission from the user to be decrypted.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought. What is explained in this text about methods is directly applicable to computer program products that consist of machine-readable instructions that, when executed by one or more processors, cause the implementation of a method of a kind described.

The term 'comprising' is used herein to mean including the method, blocks or elements identified, but such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

**Claims**

1. An arrangement for setting up and maintaining user accounts, the arrangement comprising:

   - a communications system configured to set up and maintain communications with user devices and with at least one trusted central arrangement, and
   - functionally coupled to said communications system an account management system;

   **wherein** said account management system is configured to:

   - generate (304) with a random number generator and provide to said communications system, for further transmission (306) towards a user device, a first digital value, referred to below as the user-specific random salt ($URT_{SALT}$),
   - respond to a subsequent registration request (311) from said user device, said registration request containing a second digital value referred to below as the user's first public key ($URT_{PK}$), by generating (312) and providing to said communications system, for further transmission towards said trusted central arrangement, a further registration request (312) containing at least said user's first public key ($URT_{PK}$), and
   - respond to a subsequent registration response (316) from said trusted central arrangement, said registration response (316) containing a third digital value referred to below as the user's second public key ($UAT_{PK}$), by generating and providing to said communications system, for further transmission towards said user device, a further registration response (319) containing at least said user's second public key ($UAT_{PK}$).

2. An arrangement according to claim 1, wherein said account management system is configured to make said further registration response contain also said user-specific random salt ($URT_{SALT}$).

3. An arrangement according to claim 2, wherein said account management system is configured to format said further registration response in the form of a graphically representable code (401).

4. An arrangement according to any of the preceding claims, wherein said account management system is configured to:

   - maintain an account of digital assets associated with said user device,
   - respond to a transaction request (610), received from said trusted central arrangement subsequent to said registration response (316), by attempting decrypting (611) at least a part of said transaction request (610) with said user's first public key ($URT_{PK}$), and
   - only if said attempted decrypting (611) succeeds, execute (612) a transaction requested in said transaction request (610) on said account of digital assets.

5. An arrangement according to claim 4, wherein said account management system is configured to only execute (612) said transaction if said transaction request (610) was the first transaction request concerning which said attempted decrypting (611) with said user's first public key ($URT_{PK}$) succeeded.

6. An arrangement according to claim 4 or 5, wherein said account management system is configured to:

   - attempt decrypting (611) at least a part of said transaction request (610) with said user's second public key ($UAT_{PK}$), and
   - only if said attempted decrypting (611) with said user's second public key ($UAT_{PK}$) succeeds, execute (612) said transaction.

**7.** A method for setting up and maintaining user accounts, the method comprising:

- generating (304) with a random number generator a first digital value, referred to below as the user-specific random salt ($URT_{SALT}$), and transmitting (306) said user-specific random salt ($URT_{SALT}$) towards a user device,
- responding to a subsequent registration request (311) from said user device, said registration request containing a second digital value referred to below as the user's first public key ($URT_{PK}$), by generating (312) and transmitting to a trusted central arrangement a further registration request (312) containing at least said user's first public key ($URT_{PK}$), and
- responding to a subsequent registration response (316) from said trusted central arrangement, said registration response (316) containing a third digital value referred to below as the user's second public key ($UAT_{PK}$), by generating and transmitting to said user device a further registration response (319) containing at least said user's second public key ($UAT_{PK}$).

**8.** A method according to claim 7, wherein said generating of the further registration response comprises making said further registration response contain also said user-specific random salt ($URT_{SALT}$).

**9.** A method n arrangement according to claim 8, comprising formatting said further registration response in the form of a graphically representable code (401) .

**10.** A method according to any of claims 7 to 9, comprising:

- maintaining an account of digital assets associated with said user device,
- responding to a transaction request (610), received from said trusted central arrangement subsequent to said registration response (316), by attempting decrypting (611) at least a part of said transaction request (610) with said user's first public key ($URT_{PK}$), and
- only if said attempted decrypting (611) succeeds, executing (612) a transaction requested in said transaction request (610) on said account of digital assets.

**11.** A method according to claim 10, comprising only executing (612) said transaction if said transaction request (610) was the first transaction request concerning which said attempted decrypting (611) with said user's first public key ($URT_{PK}$) succeeded.

**12.** A method according to claim 10 or 11, comprising:

- attempting decrypting (611) at least a part of said transaction request (610) with said user's second public key ($UAT_{PK}$), and
- only if said attempted decrypting (611) with said user's second public key ($UAT_{PK}$) succeeds, executing (612) said transaction.

**13.** A computer program product comprising one or more sets of one or more machine-readable instructions that, when executed by one or more processors, cause the implementation of a method according to any of claims 7 to 12.

TRUST PROVIDER
(VAULT)

SERVICE PROVIDER
(BANK)

MERCHANT

USER

101

USER APPROACHES BANK TO REGISTER AS A
USER OF A DIGITAL WALLET

102

USER, BANK, AND VAULT COOPERATE TO ENSURE
SECURE USE OF THE DIGITAL WALLET

103

USER GOES TO MERCHANT
TO BUY A PRODUCT

104

PARTIES COOPERATE TO TRANSFER PRICE OF PRODUCT
SECURELY FROM USER'S DIGITAL WALLET TO MERCHANT

**Fig. 1**

TRUST PROVIDER
(VAULT)

SERVICE PROVIDER
(BANK)

USER

101

USER APPROACHES BANK TO REGISTER AS A
USER OF A DIGITAL WALLET

102

USER, BANK, AND VAULT COOPERATE TO ENSURE
SECURE USE OF THE DIGITAL WALLET

201

PARTIES COOPERATE TO RECOVER DIGITAL ASSETS OF USER
AFTER LOSS AT USER'S END

**Fig. 2**

**Fig. 3**

**Fig. 4**

**Fig. 5**

TRUST
PROVIDER
(VAULT)

TRUST
PROVIDER
(WALLET)

SERVICE
PROVIDER
(BANK)

MERCHANT

601
GENERATING
TRANSACT. REQ.

602 SETUP REQUEST

SETUP RESPONSE 603

604
RECEIVING
USER INPUT

605
CALCULATING
KEY(S)

606 TRANSACTION REQUEST

607
IDENTIFYING
USER

608
WALLET REQUEST

WALLET

609

610
SIGNING TRANS-
ACTION REQUEST

TRANSACT. REQUEST

611

612
CHECKING
VALIDITY

613
EXECUTING
TRANSACTION

614
RECEIPT

RECEIPT 615

616
DISCARDING
WALLET

**Fig. 6**

17

**Fig. 7**

Europäisches
Patentamt

European
Patent Office

Office européen
des brevets

## EUROPEAN SEARCH REPORT

Application Number

EP 23 17 2580

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 231 583 A1 (GURULOGIC MICROSYSTEMS OY [FI]) 23 August 2023 (2023-08-23) * figures 1,9,10 * * paragraphs [0002], [0008], [0052] * * paragraphs [0071], [0082], [0083] * ----- | 1,7,13 | INV. H04L9/08 H04L9/14 G06Q20/06 |
| X | US 2022/116214 A1 (JENTZSCH CHRISTOPH [DE] ET AL) 14 April 2022 (2022-04-14) * paragraphs [0002], [0003], [0021] – [0023] * * paragraphs [0028] – [0030], [0037], [0049] * * paragraphs [0054], [0058] * ----- | 1-13 | |

TECHNICAL FIELDS
SEARCHED       (IPC)

H04L
G07G
G06Q

The present search report has been drawn up for all claims

| Place of search | Date of completion of the search | Examiner |
|---|---|---|
| Munich | 27 September 2023 | Yamajako-Anzala, A |

EPO FORM 1503 03.82 (P04C01)

## ANNEX TO THE EUROPEAN SEARCH REPORT
## ON EUROPEAN PATENT APPLICATION NO.

EP 23 17 2580

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2023

| Patent document cited in search report | | Publication date | Patent family member(s) | | Publication date |
|---|---|---|---|---|---|
| EP 4231583 | A1 | 23-08-2023 | EP | 4231583 A1 | 23-08-2023 |
| | | | WO | 2023156709 A1 | 24-08-2023 |
| US 2022116214 | A1 | 14-04-2022 | EP | 4229573 A1 | 23-08-2023 |
| | | | US | 2022114578 A1 | 14-04-2022 |
| | | | US | 2022116214 A1 | 14-04-2022 |
| | | | WO | 2022081921 A1 | 21-04-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22157019